# EUROPEAN PATENT SPECIFICATION

(11) **EP 1 142 488 B1**
(45) Date of publication and mention of the grant of the patent: **03.08.2005**
(21) Application number: 01830181.2
(22) Date of filing: 15.03.2001
(51) Int. Cl.: A23L 1/10

(54) **Process for the production of precooked cornmeal**
Verfahren zur Herstellung von vorgekochtem Maismehl
Procédé de fabrication de farine de mais précuite

(30) Priority: 03.04.2000 IT MI200703
(43) Date of publication of application: 10.10.2001
(73) Proprietor: Bonomelli S.R.L., 23843 Dolzago LC (IT)
(72) Inventor: Pellegrini, Marco, 22036 Erba Co (IT); Stucchi, Carlo, 20143 Milano MI (IT)
(74) Representative: Adorno, Silvano

(56) References cited:
- EP-A- 1 077 033
- WO-A-97/29647
- US-A- 3 212 904
- US-A- 4 126 707

## Description

The present invention relates to the industrial processes for the production of precooked food preparations, and particularly it relates to a continuous process for the preparation of precooked cornmeal.

The cornmeal polenta is traditionally prepared by a home-made process which requires cooking for about 40 minutes and continuous stirring of the mixture formed of cornmeal and hot water. The resulting known product is a homogeneous mixture having rough consistency, intense yellow color and a typical "toasted" taste.

Some industrial processes for the production of precooked cornmeal, suitable for considerably reducing the preparation time of the polenta are known, which use a single cooker wherein cornmeal is moistened and heated until it reaches the desired precooking degree.

However, the final product which can be obtained from these precooked cornmeals does not have the above mentioned qualities, particularly of the organoleptic kind, which are typical of the traditionally prepared polenta. It is instead a non-homogeneous mixture, wherein hard granules can be distinguished inside a fluid mass, having pale yellow color and without the typical toasted taste. WO 9729647 discloses a method for producing MASA flour, which can be used for preparing tortillas and chips.

Object of the present invention is therefore providing a process for the production of precooked cornmeal free from said drawbacks. Said object is achieved by a continuous process whose main features are specified in the first claim and other features are specified in the following claims.

A first advantage of the process according to the present invention consists in that the precooked cornmeal obtained by said process is suitable for the preparation of a food product which reproduces at best all the features of the home-made polenta.

Another advantage of the process according to the present invention consists in that it allows a considerable flexibility in the management of the working parameters thereof, and it is therefore possible to modulate automatically said parameters in order to obtain a final product having the desired features, always constant and independent from the starting material.

Further advantages and features of the process according to the present invention will appear to those skilled in the art from the following detailed description with reference to the only drawing, wherein:

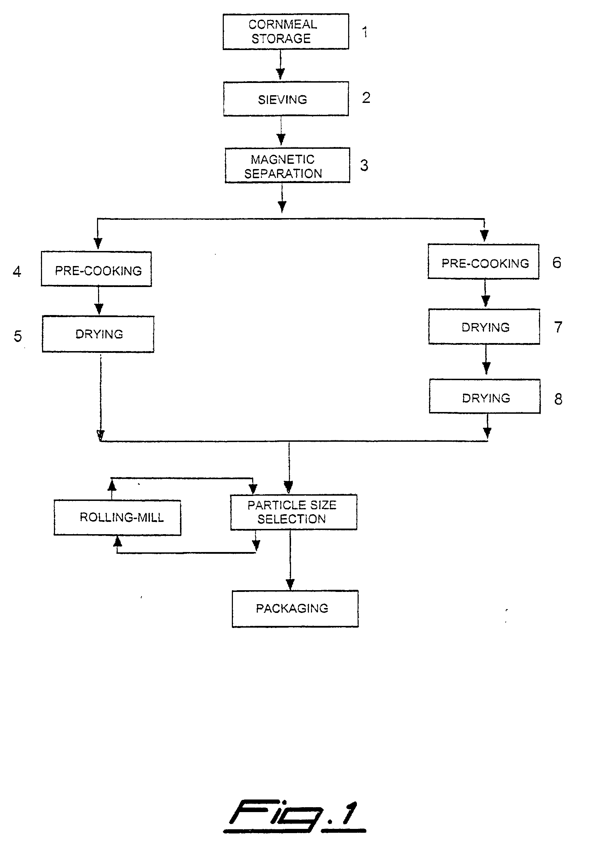

- figure 1 shows a block diagram of the continuous process for the production of precooked cornmeal according to said embodiment of the present invention.

As it is shown in the drawing, the cornmeal from the storage silos 1 is first subjected to sieving 2 in order to eliminate possible foreign substances, and subsequently to a magnetic separation 3, during which the cornmeal is passed through a magnetic field for removing the ferrous material. After said steps, the cornmeal is divided into two portions which undergo the precooking steps 4 and 6, different from each other. The first portion of cornmeal is less than half of the total quantity of cornmeal; preferably said portion is between ¼ and ½ of the total cornmeal. Each portion is then introduced in a stainless steel cooker which is internally provided with means for stirring the cornmeal. Said means can be formed for example of horizontal rods fixed to a rotating shaft. The cookers can be externally provided with a heating jacket, in the interspace of which, for example, low pressure vapor is circulated, or they can be insulated.

The precooking step 4 of the first portion of cornmeal is carried out at a temperature varying between 40 and 70°C, according to the features of the cornmeal which is used. Through a multiplicity of nozzles, water vapor is introduced into the cooker in a weight quantity comprised between 10 and 20% of the cornmeal. The quantity of vapor which is used can be determined according to the desired humidification degree of the cornmeal. During said step the first portion of cornmeal undergoes a partial precooking. Subsequently, the drying step 5 is carried out, which causes the starches expansion and further confers to the cornmeal the typical "toasted" taste; it consists in sucking the cornmeal at the cooker outlet in an air flow having a temperature between 270° and 320°C.

The second portion of the cornmeal is subjected to a more energetic precooking step 6, which is carried out at a temperature between 70 and 100°C and in the presence of a quantity of water vapor between 15 and 25% by weight of the cornmeal. In addition to the vapor, hot water is introduced into the cooker in a quantity between 10 and 20% by weight of the cornmeal. After a drying step 7, carried out similarly to step 5, said second portion of cornmeal is introduced into an oven, for example of the rotating or fluid bed type, wherein a further drying step 8 is carried out.

At this point, said first and second portion of the cornmeal are brought together and subjected again to the particle size selecting step 9. After said selecting step, the fraction of cornmeal having the desired particle size can be forwarded to the packaging step 11, whereas that with higher particle size has to be further treated in a rolling-mill before being mixed again.

## Claims

1. A continuous process for the production of precooked cornmeal comprising the subsequent sieving (2), precooking (4, 6) and particle size selecting (9) steps, **characterized in that** before the precooking (4, 6), the cornmeal is divided into two portions, the first portion being smaller than the second and being subjected to precooking (4) in the presence of a quantity of water vapor comprised between 10 and 20% by weight of the cornmeal and the second portion being subjected to precooking (6) in the presence of a quantity of water vapor comprised between 15 and 25% by weight of the cornmeal and of a quantity of hot water comprised between 10 and 20% by weight of the cornmeal.

2. A process according to claim 1, **characterized in that** said first portion of cornmeal is greater than ¼ of the total quantity of cornmeal.

3. A process according to claim 2, **characterized in that** the precooking (4) of said first portion of cornmeal comprises heating at a temperature between 40 and 70°C and that the precooking (6) of said second portion of cornmeal comprises heating at a temperature between 70 and 100°C.

4. A process according to claim 2, **characterized in that**, after said precooking steps (4, 6) said first portion and said second portion of cornmeal are separately subjected to drying steps (5, 7) with air flows whose temperature is between 270 and 320°C.

5. A process according to the preceding claim, **characterized in that** after said drying step (7), the second portion of the cornmeal is subjected to a further drying step (8).

6. A process according to the preceding claim, **characterized in that** after said drying steps (5, 8) the first portion and the second portion of the cornmeal, brought together, are subjected to said particle size selecting step (9).

7. A process according to one or more of the preceding claims, **characterized in that** after said particle size selecting step (9) the fraction having the larger particle size is treated in a rolling-mill (10) and then brought together with the rest of the cornmeal.

## Patentansprüche

1. Kontinuierliches Verfahren zur Herstellung von vorgekochtem Maismehl mit aufeinanderfolgenden Sieb- (2), Vorkoch- (4, 6) und Partikelgrößen-Auswahl- (9) Schritten, **dadurch gekennzeichnet, daß** das Maismehl vor der Vorkochung (4, 6) in zwei Portionen geteilt wird, wobei die erste Portion kleiner als die zweite ist und einer Vorkochung (4) in Anwesenheit einer Wasserdampfmenge, die zwischen 10 und 20 Gew.% des Maismehls beträgt, unterzogen wird, und die zweite Portion einer Vorkochung (6) in Anwesenheit einer Wasserdampfmenge, die zwischen 15 und 25 Gew.% des Maismehls beträgt, und einer Menge von heißem Wasser, die zwischen 10 und 20 Gew.% des Maismehls beträgt, unterzogen wird.

2. Verfahren nach Anspruch 1, **dadurch gekennzeichnet, daß** die erste Portion des Maismehls größer als ¼ der Gesamtmenge des Maismehls ist.

3. Verfahren nach Anspruch 2, **dadurch gekennzeichnet, daß** die Vorkochung (4) der ersten Portion des Maismehls ein Erwärmen bei einer Temperatur zwischen 40 und 70°C umfaßt und daß die Vorkochung (6) der zweiten Portion des Maismehls ein Erwärmen bei einer Temperatur zwischen 70 und 100°C umfaßt.

4. Verfahren nach Anspruch 2, **dadurch gekennzeichnet, daß** nach den Vorkoch-Schritten (4, 6) die erste Portion und die zweite Portion des Maismehls Trocknungsschritten (5, 7) mit Luftströmungen getrennt unterzogen werden, deren Temperatur zwischen 270 und 320°C liegt.

5. Verfahren nach dem vorhergehenden Anspruch, **dadurch gekennzeichnet, daß** nach dem Trocknungsschritt (7) die zweite Portion des Maismehls einem weiteren Trocknungsschritt (8) unterzogen wird.

6. Verfahren nach dem vorhergehenden Anspruch, **dadurch gekennzeichnet, daß** nach den Trocknungsschritten (5, 8) die erste Portion und die zweite Portion des Maismehls zusammengebracht einem Partikelgrößen-Auswahlschritt (9) unterzogen werden.

7. Verfahren nach einem oder mehreren der vorhergehenden Ansprüche, **dadurch gekennzeichnet, daß** nach dem Partikelgrößen-Auswahlschritt (9) die Fraktion, welche die größere Partikelgröße aufweist, in einer Walzenmühle (10) behandelt wird und dann mit dem Rest des Maismehls zusammengebracht wird.

## Revendications

1. Procédé continu pour la production d'une semoule de maïs précuite comportant les étapes successives de tamisage (2), de précuisson (4, 6), et de sélection de taille de particule (9), **caractérisé en ce qu'**avant la précuisson (4, 6), la semoule de maïs est divisée en deux parties, la première partie étant plus petite que la seconde et étant soumise à une précuisson (4) en présence d'une quantité de vapeur d'eau comprise entre 10 et 20 % en poids de la semoule de maïs et la seconde partie étant soumise à une précuisson (6) en présence d'une quantité de vapeur d'eau comprise entre 15 et 25 % en poids de la semoule de maïs et d'une quantité d'eau chaude comprise entre 10 et 20 % en poids de la semoule de maïs.

2. Procédé selon la revendication 1, **caractérisé en ce que** ladite première partie de semoule de maïs est supérieure à 1/4 de la quantité totale de semoule de maïs.

3. Procédé selon la revendication 2, **caractérisé en ce que** la précuisson (4) de ladite première partie de semoule de maïs comporte le chauffage à une température comprise entre 40 et 70°C et **en ce que** la précuisson (6) de ladite seconde partie de semoule de maïs comporte le chauffage à une température comprise entre 70 et 100°C.

4. Procédé selon la revendication 2, **caractérisé en ce que**, après lesdites étapes de précuisson (4, 6), ladite première partie et ladite seconde partie de semoule de maïs sont soumises séparément à des étapes de séchage (5, 7) à l'aide d'écoulements d'air dont la température est comprise entre 270 et 320°C.

5. Procédé selon la revendication précédente, **caractérisé en ce qu'**après ladite étape de séchage (7), la seconde partie de la semoule de maïs est soumise à une autre étape de séchage (8).

6. Procédé selon la revendication précédente, **caractérisé en ce qu'**après lesdites étapes de séchage (5, 8), la première partie et la seconde partie de la semoule de maïs, réunies ensemble, sont soumises à ladite étape de sélection de taille de particule (9).

7. Procédé selon l'une quelconque des revendications précédentes, **caractérisé en ce que**, après ladite étape de sélection de taille de particule (9), la fraction ayant la taille de particule plus grande est traitée dans un broyeur à rouleau (10) et ensuite mise ensemble avec le reste de la semoule de maïs.
